Europäisches Patentamt

European Patent Office

Office européen des brevets

(19)

(11) **EP 0 509 979 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int Cl.⁶: **G01D 5/38**

(21) Anmeldenummer: **92890080.2**

(22) Anmeldetag: **03.04.1992**

(54) **Photoelektronische Positionsmesseinrichtung**

Photo-electronic position-measuring device

Dispositif de mesure de positions photo-électronique

(84) Benannte Vertragsstaaten:
**BE CH DE FR GB IT LI LU NL SE**

(30) Priorität: **18.04.1991 AT 813/91**

(43) Veröffentlichungstag der Anmeldung:
**21.10.1992 Patentblatt 1992/43**

(73) Patentinhaber: **RSF-Elektronik Gesellschaft m.b.H.**
**A-5121 Tarsdorf 93 (AT)**

(72) Erfinder:
• **Rieder, Heinz**
**A-5110 Oberndorf (AT)**

• **Schwaiger, Max**
**A-5121 Ostermiething (AT)**

(74) Vertreter: **Hübscher, Heiner, Dipl.-Ing. et al**
**Spittelwiese 7**
**A-4020 Linz (AT)**

(56) Entgegenhaltungen:
EP-A- 0 163 824  EP-A- 0 223 009
EP-A- 0 266 499  EP-A- 0 387 520
FR-A- 2 615 281

• PATENT ABSTRACTS OF JAPAN vol. 8, no. 215 (P-305)(1652) 2. Oktober 1984 ; & JP-A-59 099 219
• PATENT ABSTRACTS OF JAPAN vol. 7, no. 10 (P-168)(1155) 14. Januar 1983 ; & JP-A-57 169 613

**Beschreibung**

Die Erfindung betrifft eine photoelektrische Positionsmeßeinrichtung, mit einem reflektierenden Maßstab-Phasengitter, einem relativ zum Maßstab verstellbaren Abtast-Phasengitter, wenigstens einer relativ zu dem Abtast-Phasengitter feststehenden Lichtquelle und Photoempfängern, die Gruppen bestimmter Beugungsordnung aus dem durch die zweimalige Beugung des Lichtes an dem Abtast-Phasengitter und durch die Beugung am Maßstab-Phasengitter entstehenden Interferenzbild empfangen und entsprechend deren Intensitätsänderungen bei der Relativverstellung von Abtast- und Maßstab-Phasengittern periodische, gegeneinander phasenverschobene Meßsignale erzeugen.

Derartige Positionsmeßeinrichtungen arbeiten nach dem Prinzip des sogenannten Dreigitter-Schrittgebers, der einen relativ einfachen Aufbau hat. Eine entsprechende Positionsmeßeinrichtung ist aus der GB-PS 1 474 049 bekannt. Bei diesen bekannten Meßeinrichtungen werden grundsätzlich immer die 0-te, also ungebeugte Gruppe und einen gleichen positiven und negativen Phasenversatz aufweisende Gruppen des Beugungsbildes für die Auswertung mittels der Photoempfänger erfaßt, wobei aus diesen Signalen die Bewegungsrichtung des Abtastgitters gegenüber dem als reflektierendes Phasengitter ausgebildeten Maßstab und auch das Ausmaß der Verstellung des Abtastgitters gegenüber dem Maßstab bestimmt werden kann. Nach der DE-OS 23 16 248 sind bei einer entsprechenden Anordnung drei Photoempfänger vorgesehen, welche die 0-te Gruppe des Beugungsbildes und die positiven und negativen Beugungsbilder erster Ordnung erfassen. Eine Sonderausführung der letztgenannten Anordnung ist aus der EP-B-0 163 362 bekannt. Dort wird durch eine Sonderausbildung des Abtastgitters durch ein von 1 : 1 abweichendes Steg : Lückeverhältnis, beispielsweise in der Größenordnung von 1 : 3 und entsprechende Abstimmung der Stufenhöhe sowie durch entsprechende Anpassung der Anordnung der Photoempfänger eine Erhöhung der Unempfindlichkeit hinsichtlich einer Änderung des Phasenversatzes durch Abstandsänderungen der Gitter und einen Empfang der Beugungsgruppen 0-ter und positiver und negativer erster Ordnung angestrebt, drei möglichst genau um 120° gegeneinander phasenverschobene Meßsignale zu erhalten. Der Phasenversatz kann im wesentlichen erreicht werden, doch hat sowohl dieses letztgenannte Positionsmeßeinrichtung als auch alle anderen bekannten Einrichtungen entscheidende Nachteile. Zunächst kann sich die Absoluthöhe bzw. die absolut betrachtete Änderung der Signale abhängig von der Beleuchtungsstärke, den Abständen zwischen den Gittern und den optischen Verlusten während des Meßvorganges ändern, so daß die Maßsignale vor der Verarbeitung normalisiert werden müssen und weiterhin lassen sich aus drei um 120° gegeneinander phasenverschobenen Signalen nicht unmittelbar für die Länge- oder Winkelmessung brauchbare Meßsignale ableiten. Es ist vielmehr notwendig, durch Umformung und Umrechnung aus diesen drei Signalen zunächst zwei um 90° phasenverschöbene analoge, sinusähnliche Signale zu bilden, aus denen dann nach bei normalen Inkrementalmeßsystemen üblichen Verfahren digitale Zählsignale gewonnen werden, die für die Steuerung von Vor-Rückwärtszähleinrichtungen und damit in weiterer folge für die Angabe des zurückgelegten Linear- oder Drehweges verwendbar sind.

Zur Vermeidung von Störungen durch innere Reflexe ist es bei gattungsmäßig anderen Positionsmeßeinrichtungen bekannt, wenigstens ein transparentes Phasengitter zu verwenden und die gebeugten Teilstrahlenbündel über eine optische Umlenkeinrichtung durch das bzw. die Gitter im Abstand vom Einfallsbereich des Lichtes zurück zu Empfängern zu leiten. Hier wird vorzugsweise ein Laser als Lichtquelle verwendet. In weiterer Folge werden wieder Beugungsbilder der 0-ten und positive und negative Beugungsbilder einer n-ten Ordnung über Photodetektoren erfaßt, zur Gewinnung von drei um 120° phasenverschobenen Signalen eingesetzt und aus ihnen durch die schon erwähnte Umrechnung und Umformung Meßsignale erzeugt. Aus der EP-A-0 387 481 ist es bekannt, als Maßstab nur ein Phasengitter zu verwenden, im Durchlichtverfahren zu arbeiten und zwei kohärente Teilstrahlenbündel des Lichtes mit Einfallswinkeln gegenüber der Normalen auf das Gitter einzuleiten, so daß diese Teilstrahlenbündel am Gitter gebeugt werden, miteinander interferieren und von Photoempfängern einer Meßeinrichtung aus dem Interferenzbild wieder Meßsignale gewonnen werden können. Auch bei Zweigitteranordnungen ist es bekannt, das Licht unter einem gegebenen Einfallswinkel in das erste Gitter einzuleiten, um so die Verstellrichtung bei der Messung leichter detektieren zu können und hinreichend differenzierte Beugungsbilder zur Erfassung durch die Photodetektoren zu erhalten.

Aus der EP-A-0 223 009 ist es bekannt, am Abtastgitter in Verstellrichtung gesehen hintereinander zwei um ein Viertel der Gitterkonstante versetzte Phasengitter vorzusehen, die überdies ein von 1 : 1 abweichendes Steg/Furchenverhältnis aufweisen müssen. Hier erstreckt sich der Meßbereich über eine relativ große Länge des Maßstabes und die Anordnung wird aufwendig. Es ergibt sich allerdings der Vorteil, daß durch Zusammenführung der empfangenen Signale aus den Photoempfängern Signalnormalisierungen möglich werden. Für jede Gitterhälfte werden drei Photoempfänger wieder für die in der jeweiligen Richtung gebeugten Strahlenbündel vorgesehen.

Die Verwendung eines Maßstabes mit zwei um 1/8 der Teilung versetzten Teilungsspuren ist bei einer sich gattungsmäßig von den eingangs beschriebenen Positionsmeßeinrichtungen unterscheidenden Meßeinrichtung nach der FR-A 2 615 281 bekannt. Bei dieser Meßeinrichtung wird das Licht einer Lichtquelle in zwei Teilstrahlenbündel geteilt, die auseinandergeleitet werden und in großem Abstand voneinander auf Abtastgitter fallen, deren Aufgabe darin besteht, das von ihnen gebeugte Licht ganz exakt auf eine gemeinsame Fläche eines reflektierenden Gittermaßstabes abzuleiten. Die auf der Achse des halben Einfallswinkels der beiden von den Abtastgittern gebeugten Lichtstrahlen interferierenden Lichtbündel werden nach verschiedenen Systemen verarbeitet, wobei die Interferenzbilder über Teilprismen ausgeblendet und zu Photoempfängern geleitet werden, bei denen ein Phasenversatz der Signale auftritt. Werden nur zwei Empfänger eingesetzt, dann werden am Maßstab, wie erwähnt, zwei um 1/8 der Teilung versetzte Teilungsspuren verwendet, um in diesen beiden Empfängern phasenversetzte Signale zu erzielen. Da gesonderte Abtastgitter im Abstand voneinander Verwendung finden, können schon bei geringsten Verkippungsfehlern der Abtastgitter gegenüber dem Maßstab Signalverfälschungen und Meßfehler auftreten.

Aus den Patent Abstracts of Japan Vol. 8 Nr. 215 ist eine Positionsmeßeinrichtung bekannt, bei dem das von einer Lichtquelle kommende Licht zunächst parallelgerichtet und dann in einem halbdurchlässigen Spiegel geteilt wird, so daß ein Teil des Lichtes unmittelbar auf eine Sammellinse fällt, der andere Teil aber schräg durch einen ein optisches Gitter bildenden Maßstab auf ein relativ zur Lichtquelle feststehendes Abtastgitter geleitet, von diesem reflektiert und nach nochmaliger Beugung am Maßstab über den halbdurchlässigen Spiegel mit dem vorher abgeleiteten Anteil des Lichtes zur Interferenz gebracht wird. Durch Verwendung einer Lochblende werden nur bestimmte Beugungsordnungen ausgenutzt und auf Photoempfängern abgebildet, um so vier phasenverschobene Sinussignale zu erzeugen. Um dies zu erreichen, wird ein Abtastgitter mit acht Einzelfeldern verwendet, deren Gitter gegeneinander einen Phasenversatz von 1/8 der Gitterkonstante besitzen. Bei den an den Photoempfängern empfangenen Signalen können Schwankungen in der Signalhöhe und Phasenlage auftreten.

Aufgabe der Erfindung ist die Schaffung einer nach dem Prinzip des Dreigitter-Schrittgebers arbeitenden photoelektrischen Positionsmeßeinrichtung, bei der ein einfacher Aufbau ermöglicht wird, eine Unempfindlichkeit gegen Schwankungen der absoluten Höhe der empfangenen Signale gegeben ist und bei der die empfangenen Signale mit einfachen Mitteln korrigiert und in für die Weiterverarbeitung geeignete Meßsignale, insbesondere digitale Zählsignale, umgewandelt werden können.

Die gestellte Aufgabe wird durch die Merkmalskombination des Patentanspruches 1 gelöst.

Durch die Verwendung versetzter Teilungsspuren, aber eines gemeinsamen Phasengitters für die Abtastung, wird praktisch nur ein ganz bestimmter Maßstabbereich jeweils für die Erzeugung der Meßsignale ausgenutzt, wobei Verkippungsfehler weitgehend ausscheiden und einfache Korrekturmöglichkeiten bestehen. Es ist möglich, mit nebeneinander in einer quer zur Meßrichtung verlaufenden Reihe angeordneten Photoempfängern zwei genau um 90° phasenversetzte Signale zu erzeugen, wobei durch entsprechende.

Bemessung der Gitter (Steg/Furchenverhältnis, Furchentiefe) die Möglichkeit besteht, an jeder Maßstabspur je zwei um 180° untereinander phasenverschobene Signale zu erhalten.

Somit erhält man bei der erfindungsgemäßen Positionsmeßeinrichtung die in der inkrementalen Längenmeßtechnik üblichen vier Signale

$$I = A + B \cos (2f) \qquad III = A + B \cos (2f + 90°)$$
$$II = A + B \cos (2f + 180°) \qquad IV = A + B \cos (2f + 270°)$$

wobei

$$f = \frac{2\pi}{g} x$$

ist. Dabei bedeuten x den Verschiebweg, g die Gitterkonstante und A und B Konstante.

Durch Antiparallelschaltung der von den in einer Längsreihe angeordneten Photoempfängern erhaltenen Signale I und II bzw. III und IV wird das Meßsignal vom Gleichspannungsanteil befreit und daher weitestgehend von der Absoluthöhe des Signales unabhängig, so daß die optische Durchlässigkeit der Gitter und Änderungen der Beleuchtungsstärke die Messung kaum mehr beeinflussen. Die aus den Antiparallelschaltungen erhaltenen sinusähnlichen Signale können nach entsprechender Verstärkung in bekannter Weise als einander verstellrichtungsabhängig vor- bzw. nacheilende analoge Meßsignale für die Erzeugung von digitalen Zählsignalen verwendet werden, wobei dem Prinzip nach gleiche Auswertungsschaltungen wie bei üblichen Inkrementalmeßsystemen mit photoelektrischer Abtastung des Maßstabes durch gegeneinander phasenverschobene Gitter verwendet werden können. Selbstverständlich kann man bei der erfindungsgemäßen Positionsmeßeinrichtung zusätzlich zu den Teilungsspuren des Maßstabes in eigenen Spuren oder zwischen den Teilungsspuren Referenzmarken anbringen, die vorteilhaft ebenfalls Phasengitter bilden und von mit ihnen zusammenwirkenden Abtastgitterbereichen und Photoempfängern, die hier vorzugsweise die 0-te Ableitung des Interferenzbildes auswerten, erfaßt werden können. Bei Verwendung von zwei Lichtquellen für die beiden Teilungsspuren wird man möglichst monochromatische Lichtquellen verwenden, denen, falls erforderlich, ein Kollimator nachgeordnet wird, die aber auch von einem Laser gebildet sein können. Es genügt, das Licht jeweils nur in Form eines schmalen Streifens auszusenden.

Eine bevorzugte andere Ausführung ist im Anspruch 2 angegeben. Dabei kann Anordnung und Teilung des Beugungsgitters so gewählt werden, daß der größte Anteil des eingeleiteten Lichtes auf die Photoempfänger fällt. Durch entsprechende Wahl des Abtastgitters, dessen Steg-/Furchenbreite und dessen Furchentiefe unter Berücksichtigung der Wellenlänge des eingesetzten Lichtes wird erreicht, daß ein hoher Anteil des Lichtes in der gewählten Gruppenordnung des Beugungsbildes gebeugt und damit für die Messung ausgenützt wird.

Eine andere Möglichkeit der Verwendung nur einer Lichtquelle ist im Anspruch 3 angegeben.

Vor allem für herkömmliche, divergente Lichtquellen empfiehlt sich eine Ausführungsform nach Anspruch 4, wobei die Kondensorlinsenanordnung auch die entsprechenden Anteile des Interferenzbildes auf die Photoempfänger konzentriert. Nach einer Variante ist hier auch eine Ausführung nach Anspruch 5 möglich.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen

Fig. 1   in stark schematisierter Darstellungsweise eine mögliche prinzipielle Anordnung bei einer erfindungsgemäßen Positionsmeßeinrichtung von der Seite her gesehen,

Fig. 2   eine Draufsicht zu Fig. 1 zur Veranschaulichung der Relativanordnung von Beleuchtungseinrichtungen und photoelektrischen Empfängern,

Fig. 3   eine hinsichtlich der Lichtquelle abgewandelte, im übrigen aber der Fig. 1 entsprechende Schemadarstellung, bei der zur Verdeutlichung der Funktionsweise das Abtastgitter für die Strahlendurchgänge zweimal, nämlich vor und hinter dem transparent gedachten Maßstab dargestellt wurde,

Fig. 4   ein der Fig. 3 entsprechendes Schaubild,

Fig. 5   in einer der Fig. 4 entsprechenden Darstellungsweise eine Ausführungsvariante mit nur einer Lichtquelle,

Fig. 6   in einem sinngemäß eine Queransicht zu Fig. 1 darstellenden Schema eine weitere Ausführungsvariante,

Fig. 7   eine andere Ausführung wieder in einer schematischen Darstellung gemäß Fig. 6 und

Fig. 8   eine andere Ausführung in einer schematischen Darstellung gemäß Fig. 6

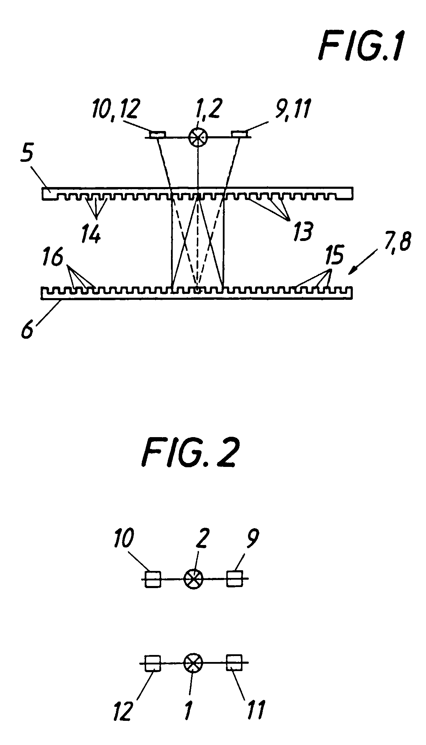

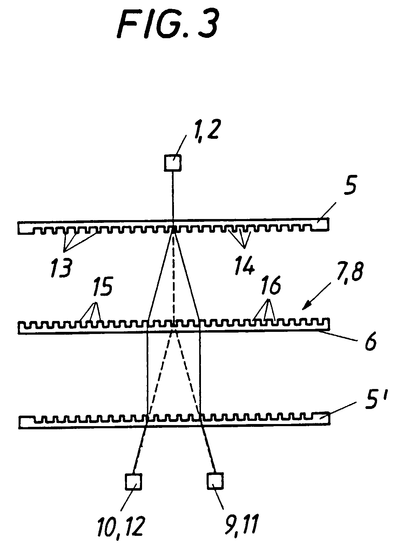

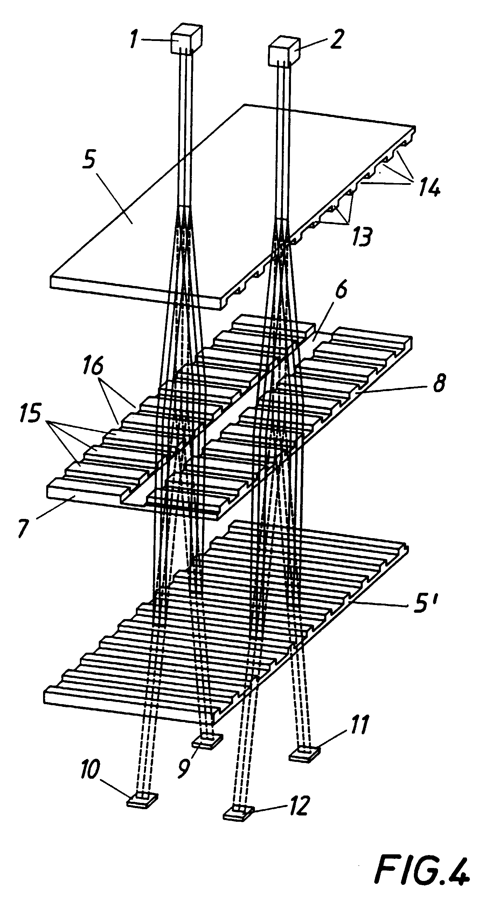

In den Fig. 1 bis 8 der Zeichnung werden gleiche Teile mit gleichen Bezugszeichen bezeichnet. Lichtquellen, die LCD's, Glühbirnen, Laserdioden bzw. Laser sein können, wurden mit 1, 2, optische Abtastgitter mit 5, ihre gedachte Zweitanordnung mit 5', die beiden Teilungsspuren des Maßstabes 6 mit 7 und 8 und die den beiden Teilungsspuren zugeordneten Photoempfänger mit 9, 10, 11, 12 bezeichnet. In den Fig. 1 bis 5 und 9 wurden die in den anderen Figuren durch Rechteckdarstellung der Lichtquellen 1, 2 angedeuteten Kollimatorlinsen der Einfachheit halber nicht gezeichnet.

Das Abtastgitter 5 ist als Stufengitter ausgebildet, bei dem die Querbalken 13 schmäler als die Vertiefungen 14 ausgebildet sind. Dagegen sind die Teilungsspuren 7, 8 des Maßstabes als Gitter mit gleicher Breite der Balken und Lücken 15, 16 ausgeführt. Bei den Ausführungsbeispielen besitzen zwar das Abtastgitter und die Teilungsspuren die gleiche Teilungsperiode, doch sind ohne weiteres auch Anordnungen möglich, bei denen die Teilungsperiode der Maßstabspuren 7, 8 von der Teilungsperiode des Abtastgitters 15 abweicht. Die beiden Teilungsspuren 7, 8 des Maßstabes 6 sind gegeneinander um 1/8 der Gitterkonstante versetzt. Nach den Fig. 1 bis 4 ist für jede Maßstabspur 7, 8 eine eigene Lichtquelle 1, 2 vorgesehen. Das von diesen Lichtquellen ausgesandte Licht wird beim Austritt aus dem Abtastgitter 5 gebeugt und dadurch in Längsrichtung des Maßstabes 6 aufgefächert, wobei durch Reflexion und Beugung des Lichtes auf den Gittern der Teilungsspuren 7, 8 ein Beugungsbild entsteht, das wieder auf das Abtastgitter 5 fällt und vom Abtastgitter noch einmal gebeugt wird. Die Photoempfänger 9, 10 bzw. 11, 12 sind so angeordnet, daß sie die Interferenz der in die jeweilige Richtung gebeugten Lichtbündel erfassen, wobei das Abtastgitter 5 so gestaltet ist, daß die Signale vom Photoelement 9 und 10 sowie die Signale vom Photoelement 11 und 12 um 180° phasenversetzt sind. Bei einer Relativverstellung des Abtastgitters 5 gegenüber dem Maßstab 6 ändert sich die Intensität des Lichtes, das auf die Photoelemente 9 bis 12 fällt, auch abhängig von der Verstellrichtung, so daß die Verstellrichtung aus den Signalen definiert werden kann. Die jeweils in Querreihen nebeneinander angeordneten Empfänger 9, 11 und 10, 12 empfangen wegen des Versatzes der Teilungsspuren 7, 8 gegeneinander um 90° phasenverschobene Signale. Die Empfänger 9, 10 bzw. 11, 12 werden in weiterer Folge in Antiparallelschaltung verbunden, so daß die von dieser Parallelschaltung abnehmbaren Signale weitgehend von Störungseinflüssen durch Änderung der Gesamtbeleuchtungsstärke und der optischen Dichte im Strahlengang unabhängig werden. Diese Signale entstehen in ihrer Grundform als sinusähnliche Signale, deren Signalzuglänge der halben Teilungskonstante der Gitter der Maßstabteilungsspuren 7, 8 entspricht. Die Signale können in bekannter Weise verstärkt, umgeformt und über Triggerschaltungen od. dgl. in digitale Zählsignale für die Steuerung von Anzeigeeinheiten, Maschinensteuerungen u. dgl. umgewandelt werden, wobei bei den Ausführungsbeispielen zwar nur lineare, in der Praxis über die gesamte Meßlänge reichende Maßstäbe 6 veranschaulicht wurden, selbstverständlich aber auch eine analoge Anordnung mit einem auf einem Kreisring liegenden Meßstab 6 für die Winkelmessung möglich ist. Vorzugsweise wird man hier den Maßstab 6 am Umfang einer zylindrischen Trommel anbringen. Am Maßstab können noch zwischen den Teilungsspuren oder beidseits außerhalb dieser Teilungsspuren 7, 8 Referenzmarken angebracht sein, für die am Abtastgitter Gegenmarken, Beleuchtungseinrichtungen und Empfänger vorgesehen sind und die in einer ganz bestimmten Relativverstellung der Abtasteinheit zum Maßstab einen detektierbaren Referenzimpuls zur Definition eines Maßstabnullpunktes od. dgl. erzeugen.

Selbstverständlich wurden die Gitter des Abtastgitters 5 und der Maßstabteilspuren 7, 8 bei den Ausführungsbeispielen stark vergrößert und überhöht gezeichnet. In der Praxis wird mit Gitterkonstanten in der Größenordnung von µm und mit noch kleiner als die Gitterkonstante gehaltenen Stufenhöhen der Gitter gearbeitet, wobei die Stufenhöhen und das Lücke-Balkenverhältnis der Abtastgitter 5 auch von der Wellenlänge des eingesetzten Lichtes abhängt.

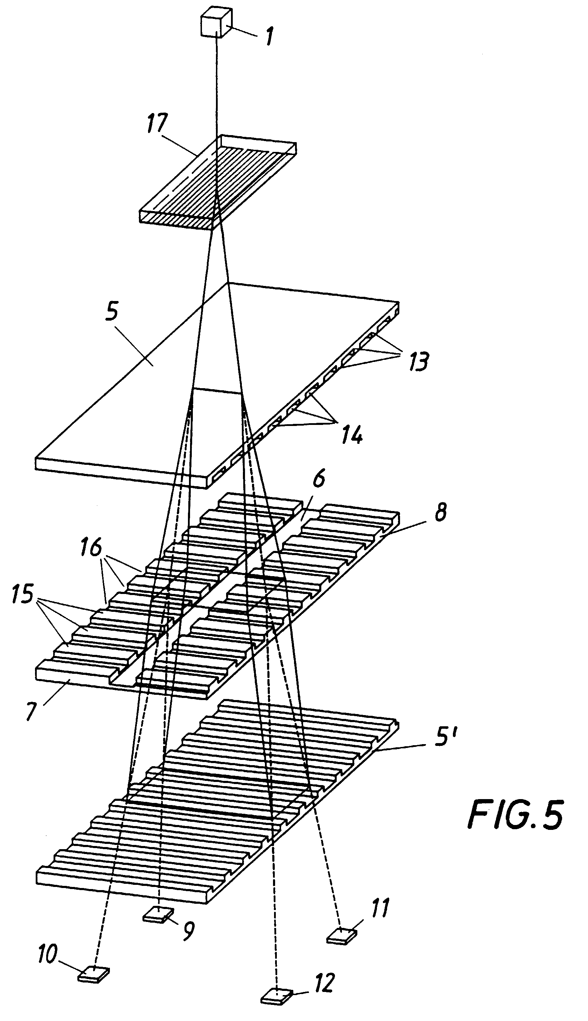

Bei der Ausführung nach Fig. 5 ist nur eine einzige Lichtquelle 1 vorgesehen, die einen Lichtstrahl abgibt, der über ein optisches Beugungsgitter 17 quer über das Gitter 5 aufgefächert wird, so daß diese aufgefächerten, am Gitter 5 erstmalig gebeugten Teilstrahlen auf die beiden Maßstabteilspuren fallen, dort unter weiterer Beugung reflektiert werden und schließlich über das Gitter 5' zurück auf die Empfänger 9, 10, 11, 12 gelangen.

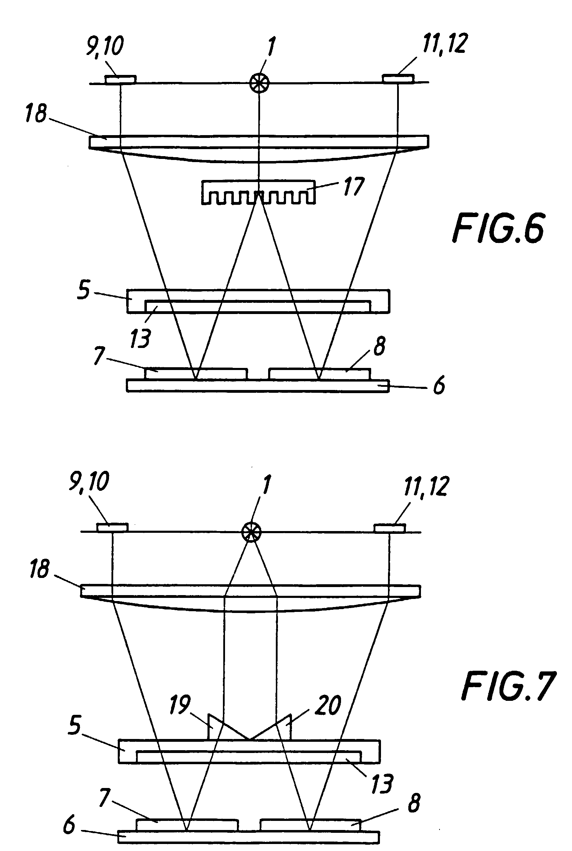

Nach Fig. 6 ist eine ähnliche Anordnung vorhanden, bei der das Licht einer Lichtquelle 1 aber zusätzlich durch eine Kondensorlinsenanordnung 18 gesammelt und dann am Gitter 17 aufgefächert wird, wobei auch die Teilstrahlen der ausgewählten Interferenzbildgruppe noch einmal durch die Kondensorlinse geführt werden, bevor sie auf die Empfänger 9 bis 12 fallen.

Bei der Ausführung nach Fig. 7 ist das optische Gitter 17 der Fig. 5 und 6 durch zwei das Lichtbündel durch das Gitter 5 zu den Maßstabteilspuren 7, 8 umlenkende Dreieckprismen 19, 20 ersetzt.

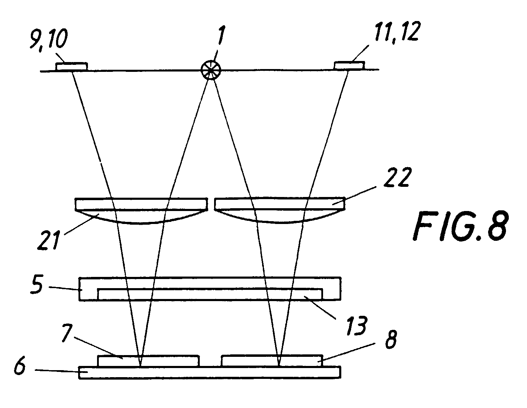

Gemäß Fig. 8 sind den beiden Maßstabteilspuren 7, 8 und den ihnen zugeordneten Empfängern 9, 10 bzw. 11, 12 jeweils eigene Kondensorlinsenanordnungen 21, 22 zugeordnet, die das von der Lichtquelle 1 kommende Licht gesondert über das Gitter 5 zu den Maßstabteilstücken und die ausgewählten Interferenzbildgruppen zu den Empfängern 9, 10 bzw. 11, 12 lenken.

**Patentansprüche**

1. Photoelektrische Positionsmeßeinrichtung, mit

   - einem reflektierenden Maßstab-Phasengitter,
   - einem relativ zum Maßstab (6) verstellbaren Abtast-Phasengitter (5),
   - wenigstens einer relativ zu dem Abtast-Phasengitter (5) feststehenden Lichtquelle (1, 2) und
   - Photoempfängern (9 - 12), die Gruppen bestimmter Beugungsordnung aus dem durch die zweimalige Beugung des Lichtes an dem Abtast-Phasengitter (5) und durch die Beugung am Maßstab-Phasengitter entstehenden Interferenzbild empfangen und entsprechend deren Intensitätsänderungen bei der Relativverstellung von Abtast- und Maßstab-Phasengittern periodische, gegeneinander phasenverschobene Meßsignale erzeugen, wobei
   - der Maßstab (6) zwei nebeneinander verlaufende, um 1/8 der Gitterkonstante versetzte Teilungsspuren (7, 8) aufweist,
   - ein einziges, für beide Teilungsspuren (7, 8) gemeinsames Abtast-Phasengitter (5) vorhanden ist und
   - für jede Teilungsspur (7 bzw. 8) zwei Photoempfänger (9, 10 bzw. 11, 12), die Interferenz der bei der Abtastung der beiden Teilungsspuren (7, 8) an einer gemeinsamen Maßstabstelle in dieser Richtung gebeugten Strahlenbündel empfangen und
   - um 180° phasenverschobene Meßsignale erzeugen, die paarweise wegen des Versatzes der Teilungsspuren (7, 8) des Maßstabes (7, 9) mit den aus der anderen Teilungsspur gewonnenen Meßsignalen einen Phasenversatz von 90° aufweisen.

2. Positionsmeßeinrichtung nach Anspruch 1, dadurch gekennzeichnet, daß eine optische Leiteinrichtung ein Beugungsgitter (17) aufweist, das den Lichtstrahl einer gemeinsamen Lichtquelle (1) quer zur Maßstablängsrichtung auf die Teilungsspuren (7, 8) des Maßstabes (6), die zugeordneten Abtastgitterbereiche und die Photoempfänger (9 - 12) auffächert.

3. Positionsmeßeinrichtung nach Anspruch 1, dadurch gekennzeichnet, daß am Abtastgitter (5) an der zur Lichtquelle (1) weisenden Seite das Licht der Lichtquelle auf die Teilungsspuren aufteilende Leitprismen (19, 20) vorhanden sind.

4. Positionsmeßeinrichtung nach einem der Ansprüche 1 - 3, dadurch gekennzeichnet, daß eine über den Strahlengang von der Lichtquelle (1) zu den Phasengittern (5, 7, 8) und auch über die Strahlenbündel für die ausgewählte Ordnung des Intereferenzbildes reichende Kondensorlinsenanordnung (18, 21, 22) vorhanden ist.

5. Positionsmeßeinrichtung nach einem der Ansprüche 1 - 3, dadurch gekennzeichnet, daß für die beiden Teilungsspuren (7, 8) des Maßstabes (6) gesonderte, dem Abtastgitter (5) vorgeordnete Kondensorlinsen (21, 22) vorhanden sind.

## Claims

1. A photoelectric position-measuring device comprising

   - a reflecting scale phase grating,

   - a scanning phase grating (5) adjustable relatively to the scale (6),

   - at least one light source (1, 2) which is fixed relatively to the scanning phase grating (5) and

   - photo-receivers (9 - 10) which receive groups of a defined diffraction order from the interference pattern resulting from double diffraction of light at the scanning phase grating (5) and diffraction at the scale phase grating and generate mutually phase-shifted measuring signals corresponding to the changes in intensity during relative movement of the scanning and the scale phase grating, and

   - the scale (6) has two adjacent graduation tracks (7, 8) offset by 1/8 of the grating constant,

   - a single common scanning phase grating (5) is provided for both tracks (7, 8),

   - two photo-receivers (9, 10; 11, 12) for each track (7, 8) receive the interference of the beam diffracted in this direction at a common place on the scale during scanning of the two tracks (7, 8) and

   - generate measuring signals which are phase-shifted by 180° and in pairs have a phase shift of 90° relative to the measuring signals obtained from the other track, owing to the offset between the tracks (7, 8) on the scale (7, 9).

2. A position-measuring device according to claim 1, characterised in that an optical guide device comprises a diffraction grating (17) which spreads out the beam from a common light source (1) transversely to the longitudinal direction of the scale, between the tracks (7, 8), the associated scanning-grating regions and the photo-receivers (9 - 12).

3. A position-measuring device according to claim 1, characterised in that prisms (19, 20) for dividing the light from the source among the tracks are provided on the scanning grating (5) on the side facing the light source (1).

4. A position-measuring device according to any of claims 1 to 3, characterised in that a condenser lens arrangement (18, 21, 22) is provided and extends over the path of rays from the light source (1) to the phase gratings (5, 7, 8) and also over the beams for the selected order of the interference pattern.

5. A position-measuring device according to any of claims 1 to 3, characterised in that separate condenser lenses (21, 22) disposed in front of the scanning grating (5) are provided for both tracks (7, 8) of the scale (6).

## Revendications

1. Dispositif photoélectrique de mesure d'une position, comprenant :

   - un réseau de phase d'échelle réflecteur,
   - un réseau de phase d'exploration (5) qui peut être déplacé par rapport à l'échelle (6),
   - au moins une source de lumière (1, 2) qui est fixe par rapport au réseau de phase d'exploration (5), et :
   - des récepteurs photoélectriques (9 à 12) qui reçoivent des groupes d'ordre de diffraction déterminé provenant de l'image interférentielle produite par la double réfraction de la lumière sur le réseau de phase d'exploration (5) et par la réfraction sur le réseau de phase d'échelle et qui engendrent des signaux de mesure périodiques et déphasés entre eux en correspondance avec les modifications d'intensité de ces groupes lors du déplacement relatif des réseaux de phase d'exploration et d'échelle, cependant que :
   - l'échelle (6) comporte deux séries de créneaux juxtaposées (7, 8) qui sont décalées de 1/8 de la constante du réseau,
   - il existe un réseau de phase d'exploration unique (5) qui est commun aux deux séries de créneaux (7, 8), et :
   - pour chaque série de créneaux (7, respectivement 8), deux récepteurs photoélectriques (9, 10, respectivement 11, 12) reçoivent l'interférence des faisceaux de rayons qui sont diffractés dans cette direction sur un endroit commun de l'échelle lors de l'exploration des deux séries de créneaux (7, 8), et :

- ils engendrent des signaux de mesure déphasés de 180° qui, du fait du décalage des séries de créneaux (7, 8) de l'échelle (6), présentent par paires un déphasage de 90° par rapport aux signaux de mesure qui sont obtenus à partir de l'autre série de créneaux.

2. Dispositif de mesure d'une position selon la revendication 1, caractérisé par le fait qu'un dispositif de guidage optique comporte un réseau de diffraction (17) qui disperse le rayon lumineux d'une source de lumière commune (1), transversalement par rapport à la direction longitudinale de l'échelle, pour l'envoyer sur les séries de créneaux (7, 8) de l'échelle (6), sur les régions associées du réseau d'exploration et sur les récepteurs photoélectriques (9 à 12).

3. Dispositif de mesure d'une position selon la revendication 1, caractérisé par le fait que des prismes de déviation (19, 20) sont présents sur le réseau d'exploration (5), sur son côté qui est dirigé vers la source de lumière (1), pour répartir sur les séries de créneaux la lumière de la source de lumière.

4. Dispositif de mesure d'une position selon l'une des revendications 1 à 3, caractérisé par le fait qu'est présent un dispositif à lentilles formant condenseurs (18, 21, 22) qui s'étend sur le trajet des rayons allant de la source de lumière (1) aux réseaux de phase (5, 7, 8), et aussi sur le faisceau de rayons destiné à l'ordre qui est choisi pour l'image interférentielle.

5. Dispositif de mesure d'une position selon l'une des revendications 1 à 3, caractérisé par le fait que sont présentes des lentilles formant condenseurs (21, 22) qui sont distinctes pour les deux séries de créneaux (7, 8) de l'échelle (6) et qui sont montées en amont du réseau d'exploration (5).

## FIG.1

## FIG.2

# FIG. 3

FIG.4

FIG.5

FIG.6

FIG.7

**FIG.8**